(19) Europäisches Patentamt
European Patent Office
Office européen des brevets

(11) **EP 1 882 415 A2**

(12) **EUROPEAN PATENT APPLICATION**

(43) Date of publication:
**30.01.2008 Bulletin 2008/05**

(51) Int Cl.:
*A01N 59/26* (2006.01)    *A01N 25/00* (2006.01)
*A01P 1/00* (2006.01)    *A01P 3/00* (2006.01)
*A01G 13/10* (2006.01)

(21) Application number: **07113375.5**

(22) Date of filing: **27.07.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK YU**

(30) Priority: **27.07.2006 JP 2006204816**
 **24.07.2007 JP 2007191897**

(71) Applicants:
 • **Fujitsu Ltd.**
 **Kawasaki-shi, Kanagawa 211-8588 (JP)**
 Designated Contracting States:
 **DE FR GB**
 • **The University of Tokyo**
 **Bunkyo-Ku,**
 **Tokyo 113-8654 (JP)**
 Designated Contracting States:
 **DE FR GB**

(72) Inventors:
 • **Wakamura, Masato**
 **Kawasaki-shi, Kanagawa 211-8588 (JP)**
 • **Atsuma, Katsuhiro**
 **Kawasaki-shi, Kanagawa 211-8588 (JP)**
 • **Watanabe, Toshiya**
 **Tokyo Tokyo 113-8654 (JP)**
 • **Yoshida, Naoya**
 **Tokyo Tokyo 113-8654 (JP)**

(74) Representative: **Cooper-Rolfe, Elizabeth Louise**
 **Haseltine Lake**
 **5th Floor, Lincoln House**
 **300 High Holborn**
 **London WC1V 7JH (GB)**

(54) **Plant epidemic prevention agent, plant epidemic prevention method, plant epidemic prevention agent system, plant, and plant cultivation method**

(57)    The present invention provides a plant epidemic prevention agent that allows for easily and efficiently decomposing and eliminating pathogenic germs that cause plant epidemic and effectively suppressing plant disease caused by the pathogenic germs and making diseased plants recover from the disease without adversely affecting the human body and allows for achieving environmental preservation; a plant epidemic prevention method and a plant epidemic prevention system using the plant epidemic prevention agent; plants and a plant cultivation method. The plant epidemic prevention agent contains at least a photocatalytic powder containing phosphorous or an apatite structure. The plant epidemic prevention method includes supplying the plant epidemic prevention agent to plants. The plant epidemic prevention system has at least a monitoring unit and a supplying unit, wherein lesions of a plant are detected by the monitoring unit and the plant epidemic prevention agent is supplied to the diseased plant by the supplying unit.

FIG. 1

**Description**

CROSS REFERENCE TO RELATED APPLICATIONS

This application is based upon and claims the benefits of the priority from the prior Japanese Patent Application No.2006-204816 filed on July 27, 2006 and Japanese Patent Application No. 2007-191897 filed on July 24, 2007, the entire contents of which are incorporated herein by reference.

BACKGROUND OF THE INVENTION

Field of the Invention

The present invention relates to a plant epidemic prevention agent that allows for easily and efficiently decomposing and eliminating pathogenic germs such as bacteria, viruses, bacillus and fungi that cause plant epidemic and effectively suppressing plant disease caused by the pathogenic germs and making diseased plants recover from the disease. The present invention also relates to a plant epidemic prevention method using the plant epidemic prevention agent, a plant epidemic prevention system using the plant epidemic prevention agent, a plant and a plant cultivation method.

Description of the Related Art

Recently, there has been studied and developed a technique of utilizing a material called metal-modified apatite having a photocatalytic function to adsorb organic materials to decompose them into water and carbon dioxide in plant cultivation (for example, see Japanese Patent Application Laid-Open (JP-A) No. 2006-50992). The technique is that the metal-modified apatite is made to adhere in a form of film to a plant-growing vessel, pathogenic germs such as bacteria are trapped by adsorption ability of the metal-modified apatite to decompose and eliminate the pathogenic germs to thereby prevent contamination of plant-cultivation soil.
However, the technique is the one used to prevent pathogenic germs from invading and propagating into plant-cultivation soil, and the technique do not allow for decomposing pathogenic germs adhering on stems and leaves of plants to prevent them from invading from stoma thereof.
Further, a pesticide composition is proposed in which the metal-modified apatite having a photocatalytic function is used with a pesticide active component (for example, see WO2004/000018).
The pesticide composition, however, is intended to reduce the amount of residual pesticides in soil and is not capable of decomposing pathogenic germs adhering on stems and leaves of plants to prevent pathogenic germs from invading from stoma thereof.

BRIEF SUMMARY OF THE INVENTION

Therefore, one possible object is to provide a plant epidemic prevention agent that allows for easily and efficiently decomposing and eliminating pathogenic germs such as bacteria, viruses, bacillus and fungi that cause a plant epidemic and effectively suppressing plant disease caused by the pathogenic germs or making diseased plants recover from the disease without adversely affecting the human body and also allows for achieving environmental preservation, a plant epidemic prevention method using the plant epidemic prevention agent, a plant epidemic prevention system using the plant epidemic prevention agent, a plant and a plant cultivation method.
The inventors propose the plant epidemic prevention agent that contains at least a photocatalytic powder containing phosphorus or an apatite structure. More specifically, the inventors propose the plant that has the plant epidemic prevention agent on at least the surface thereof.

BRIEF DESCRIPTION OF THE SEVERAL VIEWS OF THE DRAWINGS

FIG. 1 is a schematic illustration explaining one example of the plant epidemic prevention system and the plant epidemic prevention method of the present invention.
FIG. 2 is an electron microscope photograph showing one example of the plant epidemic prevention agent (photocatalytic titanium apatite) of the present invention.
FIG. 3 is a photograph showing a result that after irradiating with an ultraviolet ray an ajar medium to which the plant epidemic prevention agent (photocatalytic titanium apatite) of the present invention was not supplemented but a pathogenic bacterium of Phalaenopsis soft rot was inoculated, the pathogenic bacterium of Phalaenopsis soft rot proliferated in the agar.

FIG. 4 is a photograph showing a result that even after irradiating with an ultraviolet ray an ajar medium into which the plant epidemic prevention agent (photocatalytic titanium apatite) of the present invention was supplemented and a pathogenic bacterium of Phalaenopsis soft rot was inoculated, the pathogenic bacterium of Phalaenopsis soft rot did not proliferate in the agar.

FIG. 5 is a photograph showing the equipment in which the plant epidemic prevention method of the present invention was carried out using the plant epidemic prevention agent of the present invention.

FIG. 6 is another photograph showing the equipment with which the plant epidemic prevention method of the present invention was carried out using the plant epidemic prevention agent of the present invention.

FIG. 7 is a photograph taken immediately after a plant epidemic prevention agent in an aqueous dispersion form in which the photocatalytic titanium apatite (having four different particle diameters) of the present invention was dispersed in water.

FIG. 8 is a photograph taken 10 minutes after the plant epidemic prevention agent in an aqueous dispersion form in which the photocatalytic titanium apatite (having four different particle diameters) of the present invention was dispersed in water.

FIG. 9 is a photograph showing a state of leaves immediately after the plant epidemic prevention agent of the present invention was sprayed or sprinkled onto the leaves.

FIG. 10 is a photograph showing a state that Phalaenopsis orchid bloomed one year after the plant epidemic prevention agent of the present invention was sprayed or sprinkled onto the plant of the Phalaenopsis orchid that had been infected with soft rot disease.

FIG. 11 is an electron microscope photograph showing a state of stoma of a plant immediately after the plant epidemic prevention agent of the present invention was sprayed or sprinkled onto the plant.

FIG. 12 is a photograph showing a damaged part of the Phalaenopsis orchid infected with soft rot disease.

FIG. 13 is another photograph showing a damaged part of the Phalaenopsis orchid infected with soft rot disease.

DESCRIPTION OF THE PREFERRED EMBODIMENTS

When agricultural crops are densely cultivated using a greenhouse or the like in a narrow area, there are conventional problems that a plant disease occurs due to invasion of pathogenic germs such as bacteria, viruses, bacillus and fungi into plants from their stoma of stems and leaves and their roots, the plant disease is further transmitted to other individual organisms and the disease easily spreads and circulates. For the purpose of preventing or suppressing occurrence of such plant disease and making the diseased plants recover from the diseases, various antibiotics have been conventionally used.

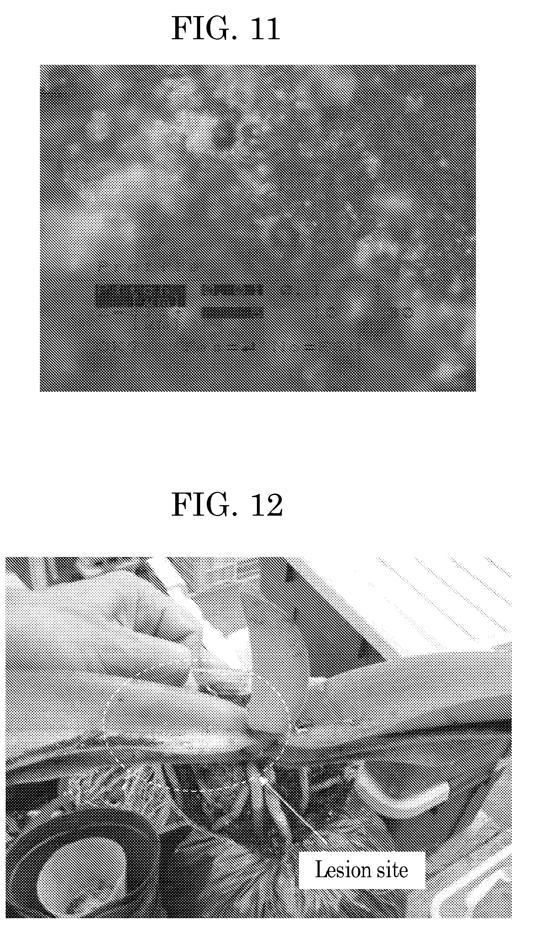

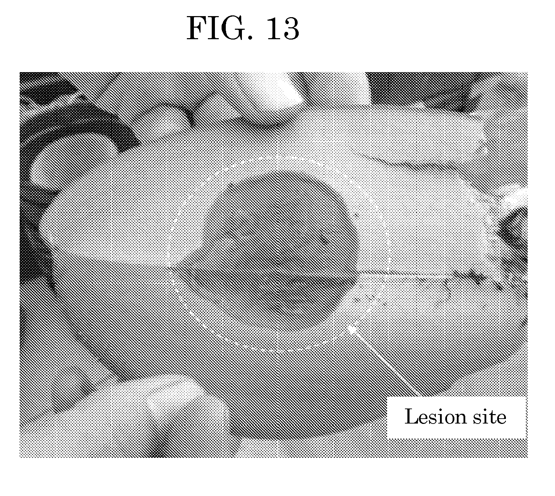

For example, in cultivation of orchids such as Phalaenopsis orchid, to prophylactically prevent epidemic diseases, for example, soft rot disease and fusarium disease, caused by the pathogenic germs such as bacteria (FIGS. 12 and 13 are photographs showing Phalaenopsis orchids caught an infection of soft rot disease), preventive measures have been taken, which include, for example, spraying a kasugamycin copper water-dispersible powder etc. used as an antibiotic, onto disease-infected orchid plants and preventing the spread of disease by immediately disposing of diseased plants.

However, to prevent occurrence of the epidemic of orchids such as soft rot disease and fusarium, there is a need to spray highly-concentrated antibiotics to plants, which adversely affects the human body and environments. Further, there are problems that occurrence of an epidemic disease cannot be completely suppressed even when these preventive measures are taken and when a plant developed a disease once, there is no choice but to dispose of the diseased plant because it is difficult to effectively cure the disease. In view of the circumstances, even with taking various measures to prevent plant epidemic diseases, not more than 10% or so of individual organisms are actually still infected with epidemic disease. Particularly, in the case of expensive plants such as orchids, occurrence of an epidemic disease causes serious losses to cultivation farmhouses.

Thus, the current situation is that there have not yet been provided so far a plant epidemic prevention agent that allows for easily and efficiently decomposing and eliminating pathogenic germs such as bacteria, viruses, bacillus and fungi that cause plant epidemic and effectively suppressing plant disease caused by the pathogenic germs and making diseased plants recover from the disease without adversely affecting the human body and also allows for achieving environmental preservation, a plant epidemic prevention method using the plant epidemic prevention agent, a plant epidemic prevention system using the plant epidemic prevention agent, a plant and a plant cultivation method.

In view of the above-mentioned shortcomings, the present inventors have investigated countermeasures vigorously, and have obtained the following findings. Specifically, the present inventors found that by supplying a photocatalyst having strong adsorption ability to pathogenic germs such as bacteria, viruses, bacillus and fungi, in a form of a fine powder, to a plant, it is possible to increase the contact probability between the photocatalyst and the pathogenic germs, thereby easily and efficiently decomposing and eliminating the pathogenic germs and is also possible to prevent a plant from being infected by an epidemic disease while preventing the plant from whitening by the adhered photocatalyst to keep its appearance excellent. Further, it is known that the photocatalyst has an antibacterial effect, however, the present inventors found that the photocatalyst enables to more effectively prevent adverse influence on the human body and environments than conventional antibacterial agents because the antibacterial effect of the photocatalyst can be exhibited by utilizing optical energy.

The present invention is based on the findings of the present inventors. The means for solving the above-mentioned problems are described in attached claims.

Specifically, the plant epidemic prevention agent of the present invention contains at least a photocatalytic powder containing phosphorus or an apatite structure. The plant of the present invention has the plant epidemic prevention agent on at least the surface thereof.

In the plant epidemic prevention agent and the plant of the present invention, the photocatalytic powder containing phosphorous or an apatite structure makes contact with pathogenic germs such as bacteria, viruses, bacillus and fungi that are trying to invade the plant, the pathogenic germs are decomposed and eliminated by the photocatalytic function to thereby prevent or suppress the proliferation. By decomposing and eliminating pathogenic germs on the surface of plants, it is possible to prevent the pathogenic germs from invading into the plants from stoma existing on their stems and leaves and their roots. As a result, also in plant cultivation, particularly in intensive cultivation using greenhouses and the like, occurrence of plant disease caused by pathogenic germs can be prevented or suppressed. Further, also in diseased plants, by supplying the plant epidemic prevention agent of the present invention to the diseased plants, it makes it possible to decompose and eliminate pathogenic germs infected to the plants and to prevent or suppress the proliferation of the pathogenic germs, as well as to make the diseased plants recover from the disease and prevent or suppress the spread of the infectious disease to other plants.

The plant epidemic prevention agent can exhibit antibacterial activity through the photocatalytic powder utilizing optical energy, and thus it does not adversely affect on the human body and allows for achieving environmental preservation as compared to conventional antibacterial agents.

In the plant epidemic prevention agent of the present invention, an embodiment of which the photocatalytic powder is an aqueous dispersion in which a photocatalytic powder is contained in a dispersed state in water is preferable. In this embodiment, the plant epidemic prevention agent can be easily used because plants are sprayed or sprinkled with the aqueous dispersion. By spraying or sprinkling the aqueous dispersion on a plant, it can be made to evenly adhere on the entire surface of the plant without whitening the plant. Therefore, pathogenic germs such as bacteria trying to invade into plants from stoma of plants surely come in contact with the photocatalyst on the surface of a plant, and the pathogenic germs are easily and efficiently decomposed and eliminated, thereby occurrence of plant disease can be prevented or suppressed, and even when the plant is infected by the pathogenic germs, the plant epidemic prevention agent can make the diseased plant recover from the disease. Further, the aqueous dispersion is absorbed in plants from roots thereof, which makes it possible to prevent pathogenic germs from invading the plants from the roots, improve antimicrobial activity of plants themselves and further improve disease suppressive effect and recovery effect of the plants. In the case of this embodiment, the photocatalytic powder is hardly precipitated in the aqueous dispersion as long as the photocatalytic powder has a volume average particle diameter of 0.5 $\mu$m or less, and the dispersed state can be preferably maintained.

In the plant epidemic prevention agent of the present invention, an embodiment of which the photocatalytic powder contains at least an apatite structure is preferable. Further, an embodiment in which the apatite structure has a metal atom required to have a photocatalytic activity and the metal atom is titanium (Ti) is more preferable. The plant epidemic prevention agent can strongly adsorb, decompose and eliminate pathogenic germs such as bacteria, viruses, bacillus and fungi and can efficiently prevent or suppress the proliferation of the pathogenic germs because the photocatalytic powder is a titanium apatite that is excellent in absorption property to various harmful materials and has a photocatalytic activity.

A photocatalyst that is presently and widely used is a titanium oxide, however, when a titanium oxide photocatalyst is used to prevent plant epidemic, there is a problem that active oxygen occurring by the photocatalyst damages the outer surface of plants. It is known that active oxygen caused by photoexcitation of a titanium oxide diffuses to several millimeters or more, and active oxygen is likely to oxidize and damage the outer surface of plants. However, inventors have revealed through experiments that active oxygen caused by photoexcitation of a titanium apatite will not diffuse a long distance in the air, like titanium oxides. Thus, use of a titanium apatite will not damage the outer surface of plants. Further, since the apatite contains phosphorous, the apatite is preferably and suitably used because it will be a fertilizer component even when directly used.

The plant epidemic prevention method of the present invention includes supplying the plant epidemic prevention agent of the present invention to a plant. The plant cultivation method of the present invention includes at least supplying the plant epidemic prevention agent of the present invention to plants.

In the plant epidemic prevention method and the plant cultivation method of the present invention, the plant epidemic prevention agent of the present invention that contains at least a photocatalytic powder containing phosphorous or an apatite structure is supplied to a plant or plants, and the surface of the plant is coated with the photocatalytic powder. Then, pathogenic germs such as bacteria, viruses, bacillus and fungi trying to invade into the plant or plants make contact with the photocatalytic powder, and the pathogenic germs can be easily and efficiently decomposed and eliminated by the contact with the photocatalytic powder. As a result, also in intensive cultivation using a greenhouse, occurrence of plant disease can be prevented and suppressed, and even when plants are infected, the photocatalyst can prevent or suppress the proliferation of pathogenic diseases and make the plants recover from disease as well as suppress the spread of disease in the greenhouse.

Since the powdery photocatalyst is supplied to a plant or plants, it makes it possible to evenly supply it in a wide area, the plant epidemic prevention agent has high efficiency of contact with pathogenic germs and allows for preventing plants from whitening on their surfaces even with use of a small amount of the plant epidemic prevention agent.

For this reason, in cultivation of expensive plants such as Phalaenopsis orchid, use of the plant epidemic prevention agent can suppress plant disease and efficiently make the diseased plant recover from the disease, and thus cultivation farmhouses can avoid a great loss that could be incurred by plant epidemic and preserve the commodity value of the plants owing to the ability of preventing the plant surface from whitening.

The plant epidemic prevention system of the present invention is equipped with at least a monitoring unit configured to monitor the hue of a plant and a supplying unit configured to supply the plant epidemic prevention agent of the present invention to the plant, in which lesions of the plant are monitored by the monitoring unit and the plant epidemic prevention agent is supplied to a diseased plant by the supplying unit.

In the plant epidemic prevention system, the monitoring unit is configured to monitor the hue of a plant and detect lesions of the plant depending on a change in the hue, and the supplying unit is configured to supply the plant epidemic prevention agent to a diseased plant detected by the monitoring unit. With this configuration, the plant epidemic prevention agent is supplied only to a diseased plant or diseased plants caused by the pathogenic germs such as bacteria, viruses, bacillus and fungi, the photocatalyst contained in the plant epidemic prevention agent makes contact with the pathogenic germs infecting the plant, and the pathogenic germs are decomposed and eliminated by the contact of the photocatalyst with the pathogenic germs, thereby allowing for stopping or suppressing progress in disease caused by proliferation and further allowing for curing the plant disease.

By not supplying the plant epidemic prevention agent to healthy plants, appearance of plants can be kept more excellent without causing whitening of plants, it makes it possible to economically use the plant epidemic prevention agent, and adverse affects on the human body and environments can also be effectively prevented.

The present invention can solve the above-mentioned conventional problems and can provide a plant epidemic prevention agent that allows for easily and efficiently decomposing and eliminating pathogenic germs such as bacteria, viruses, bacillus and fungi that cause epidemic diseases of plants, effectively suppressing plant disease caused by the pathogenic germs or making diseased plants recover from the diseases without adversely affecting the human body as well as achieving environmental preservation. The present invention can also provide a plant epidemic prevention method using the plant epidemic prevention agent and a plant epidemic prevention system using the plant epidemic prevention agent, a plant and a plant cultivation method.

(Plant Protection Agent and Plant)

The plant epidemic prevention agent of the present invention contains at least a photocatalytic powder containing phosphorous or an apatite structure, and further contains a solvent such as water and alcohol, a fertilizer such as a phosphorous compound, a pigment and other components in accordance with necessity. The plant of the present invention has the plant epidemic prevention agent of the present invention on at least the surface thereof.

The "epidemic prevention" mentioned in the present invention means preventing or suppressing occurrence of plant disease or making diseased plants recover from the diseases. The plant epidemic prevention agent of the present invention has not only a function as a preventive agent and an inhibitor against plant disease but also a function as a curing agent and a therapeutic agent for diseased plants.

The form of the plant epidemic prevention agent may be a powder containing a photocatalytic powder so that the photocatalytic powder is sprayed or sprinkled onto plants, however, an aqueous dispersion containing the photocatalytic powder in a dispersed state in water is preferable from the perspective that the form allows for easy administration of the plant epidemic prevention agent to plants and more effective prevention of whitening from diseased plants.

The method of supplying the plant epidemic prevention agent containing the aqueous dispersion is not particularly limited and may be suitably selected in accordance with the intended use, however, the plant epidemic prevention agent is preferably sprayed or sprinkled onto plants using an atomizer, a sprayer or a spreader, and With the use of the method, the plant epidemic prevention agent can be evenly supplied to plants in a wide area even with a small amount.

The solid content of the photocatalytic powder in the aqueous dispersion is preferably 30% by mass or less and more preferably 1% by mass or less. The lower limit of the solid content is preferably 0.01% by mass. When the solid content is more than 30% by mass, it may be difficult to spray or sprinkle the plant epidemic prevention agent to a plant due to the excessively high viscosity of the aqueous dispersion, and when less than 0.01% by mass, the function of decomposing and eliminating pathogenic germs by the photocatalyst may not be sufficiently obtained.

Particularly, the plant epidemic prevention agent having a solid content of 1% by mass or less allows for effectively preventing whitening of surface of stems and leaves of a plant through the use of the photocatalytic powder while keeping its excellent epidemic prevention effect and allowing for keeping the appearance of the plant excellent.

- Photocatalytic Powder -

The photocatalytic powder is not particularly limited as long as it can be activated by light irradiation, and may be suitably selected in accordance with the intended use.

The form of the photocatalytic powder is not particularly limited as long as it is formed in a powder, and the shape, size, specific gravity and the like may be suitably selected.

Further, the photocatalytic powder preferably has convexoconcaves on the surface thereof, and specifically, it has a shape like a chestnut bur, for example. When the photocatalytic powder is formed in such a shape, the surface area functioning as the photocatalyst is enlarged to thereby increase the efficiency of contact with pathogenic germs.

The size of the photocatalytic powder is not particularly limited and may be suitably selected in accordance with the type and size of the pathogenic germ to be decomposed and eliminated. However, the photocatalytic powder preferably has a volume average particle diameter of 100 $\mu$m or less from the perspective of allowing for enlarging the surface area of serving as the photocatalyst to increase the efficiency of contact with pathogenic germs and effectively preventing whitening of plant surface, and the volume average particle diameter of the photocatalytic powder is more preferably 5 $\mu$m or less from the perspective that when the photocatalytic powder is dispersed in water to prepare an aqueous dispersion, the photocatalytic powder can be dispersed in a preferable state without being precipitated. For the lower limit value of the volume average particle diameter of the photocatalytic powder, the primary particle diameter is generally approximately 50 nm, and the primary particle diameter is preferably 50 nm or more because it is difficult to produce a. photocatalyst having a further smaller size.

When the volume average particle diameter of the photocatalytic powder is more than 100 $\mu$m, the surface area of the photocatalytic powder cannot be so increased, thereby the efficiency of contact with pathogenic germs may be reduced and the surface of the plant may be whitened. The volume average particle diameter of the photocatalytic powder can be measured using, for example, a particle size distribution measuring apparatus, and preferred examples of the particle size distribution measuring apparatus include a laser beam diffraction type particle size distribution measuring apparatus, SALD-2100 manufactured by Shimadzu Corporation.

The gravity of the photocatalytic powder is not particularly limited and may be suitably selected in accordance with the intended use, however, the smaller the more preferable, and it is also preferable that the photocatalytic powder can float and circulate in the aqueous dispersion without being deposited.

The particle size distribution of the photocatalytic powder is not particularly limited and may be suitably selected in accordance with the intended use. For example, the sharper or narrower the particle size distribution is, the more evenly the photocatalytic powder can be dispersed in water.

The wavelength of light required for exhibition of photocatalytic activity of photocatalyst in the photocatalytic powder is not particularly limited and may be suitably selected in accordance with the intended use, however, a wavelength of light capable of being absorptive to a wide range of light such as ultraviolet rays to visible lights and exhibiting photocatalytic activity is preferable.

Specific material or composition of the photocatalytic powder is not particularly limited and may be suitably selected in accordance with the intended use, however, an apatite having photocatalytic activity (photocatalytic capability) is particularly preferably exemplified. When the photocatalytic powder is an apatite having photocatalytic activity, it is advantageous in that the photocatalytic powder is excellent in adsorption property to pathogenic germs such as bacteria adhering on a plant owing to adsorption property of the apatite and is also advantageous in that the adsorbed pathogenic germ can be efficiently decomposed and eliminated by its photocatalytic activity (photocatalytic capability).

Among these photocatalytic powders, a photocatalytic powder containing at least an apatite having photocatalytic activity and a visible light absorbing metal atom is preferable, and the one further containing a ultraviolet absorbing metal atom is more preferable. When the photocatalytic powder contains the visible light absorbing metal atom, it is advantageous in that the photocatalytic powder is preferably used on a daily basis, for example, under illumination of fluorescent lamp. When the photocatalytic powder further contains the ultraviolet absorbing metal atom, it is advantageous in that the photocatalytic powder is preferably used under irradiation of light including ultraviolet rays such as sunlight.

Note that for the photocatalytic powder in the present invention, it may be used singularly or two or more of the photocatalytic powders may be used.

The apatite having photocatalytic activity (photocatalytic capability) is not particularly limited and may be suitably selected in accordance with the intended use. For example, an apatite having a metal atom required to have photocatalytic activity (may be hereinafter called as a metal atom capable of exhibiting photocatalytic activity) is preferably exemplified. When the apatite has a metal atom required to have photocatalytic activity and the apatite is irradiated with light, the apatite is activated by effect of the metal atom required to have photocatalytic activity, thereby the apatite can take away electrons from the pathogenic germ such as bacterium (subject to be decomposed) adsorbed on the surface of the apatite, oxidize and decompose the pathogenic germ.

The apatite is not particularly limited and may be suitably selected from among those known in the art, and preferred examples thereof include apatites represented by the following General Formula (1).

$$A_m(BO_n)_z X_s \qquad \text{General Formula (1)}$$

In the General Formula (1), "A" represents a metal atom. The metal atom is not particularly limited and may be suitably selected in accordance with the intended use. Examples of the metal atom include calcium (Ca), aluminum (Al), lanthanum (La), magnesium (Mg), strontium (Sr), barium (Ba), lead (Pb), cadmium (Cd), europium (Eu), yttrium (Y), cerium (Ce), sodium (Na) and potassium (K). Of these, calcium (Ca) is particularly preferable in terms of its excellence in adsorption property.

In the General Formula (1), "B" represents any one of a phosphorous atom (P) and a sulfur atom (S), and among them, phosphorous atom (P) is preferably used in terms its excellence in organism affinity. When the photocatalytic powder having phosphorous that is contained in the plant epidemic prevention agent of the present invention is the apatite, the "B" is a phosphorous atom (P). In this case, an apatite of which "B" is a sulfur atom (S) may be also used in combination.

"O" represents an oxygen atom.

"X" represents any one of a hydroxyl group (OH), $CO_3$ and a halogen atom. Among them, hydroxyl group (OH) is particularly preferable in terms of its capability of forming a metal oxide type photocatalytic partial structure together with the metal atom represented by "A". For the halogen atom, fluorine atom, chlorine atom, bromine atom iodine atom are exemplified.

Further, "m", "n", "z" and "s" are respectively an integer. For example, "m" is preferably an integer of 8 to 10, "n" is preferably an integer of 3 to 4, "z" is preferably an integer of 5 to 7 and "s" is preferably an integer of 1 to 4 in terms of its favorable charge balance.

Examples of the apatite represented by General Formula (1) include hydroxy-apatite, fluoro-apatite or chloro-apatite or metal salt thereof, tricalcium phosphate or calcium hydrogen phosphate. Of these, a hydroxy apatite of which "X" is hydroxy group (OH) in General Formula (1) is preferable, and a calcium hydroxy apatite (CaHAP) of which "A" is calcium (Ca), "B" is a phosphorous atom (P) and "X" is hydroxyl group (OH) in General Formula (1), i.e., $Ca_{10}(PO_4)_6(OH)_2$ is particularly preferable.

Since the calcium hydroxy apatite (CaHAP) is easily ion-exchanged to cation and to anion, CaHAP is preferable in that it is excellent in absorption property to pathogenic germs and other harmful materials (subjects to be decomposed) and is particularly excellent in absorption property to organic substances such as protein and is also excellent in absorption property to pathogenic germs such as bacteria, viruses, bacillus and fungi which are subjects to be decomposed in the present invention, and can prevent or suppress invasion into plants or proliferation of plants.

The content of the apatite in the photocatalytic powder is not particularly limited and may be suitably adjusted in accordance with the intended use. For example, it is preferably 85 mol% to 97 mol% and more preferably 85 mol% to 90 mol%.

When the content of the apatite is less than 85 mol%, the photocatalytic activity of the photocatalytic powder may not be sufficient, and when more than 97 mol%, an effect matching the content cannot be obtained, and the absorption property and photocatalytic activity and the like of the photocatalytic powder to the pathogenic germs may be degraded.

The content of the apatite in the photocatalytic powder can be determined by carrying out, for example, the quantitative analysis by ICP-AES method.

The metal atom required to have photocatalytic activity is not particularly limited as long as it can primarily functions as a photocatalyst and may be suitably selected from among those having photocatalytic activity known in the art, and for example, at least one selected from titanium (Ti), zinc (Zn), manganese (Mn), tin (Sn), indium (In), iron (Fe) and the like in terms of their excellence in photocatalytic activity is preferably exemplified. Of these, titanium (Ti) is preferable in that it is particularly excellent in photocatalytic activity (photocatalytic capability).

The content of the metal atom required to have photocatalytic activity in the photocatalytic powder is not particularly limited and may be suitably selected in accordance with the intended use. For example, the content of the metal atom is preferably 5 mol% to 15 mol% and more preferably 8 mol% to 12 mol% to the total content of all the metal atoms contained in the photocatalytic powder.

When the content of the metal atom required to have photocatalytic activity is less than 5 mol%, the photocatalytic activity of the photocatalytic powder may not be sufficient, and when more than 15 mol%, an effect matching the content cannot be obtained, and the absorption property and photocatalytic activity and the like of the photocatalytic powder to subjects to be decomposed may be degraded.

The content of the metal atom required to have photocatalytic activity in the photocatalytic powder can be determined by carrying out, for example, the quantitative analysis by ICP-AES method.

The metal atom required to have photocatalytic activity is taken into or is substituted by a crystal structure of the apatite as part of metal atom constituting the crystal structure of the apatite, thereby the "photocatalytic partial structure" capable of exhibiting a photocatalytic function can be formed in the crystal structure of the apatite.

Since the apatite having such a photocatalytic partial structure has a photocatalytic activity, the apatite structure part is excellent in adsorption property and is more excellent in adsorption property to harmful components (subjects to be decomposed) than known metal oxides having photocatalytic activity, the apatite is also excellent in decomposition activity and antibacterial activity of pathogenic germs, excellent in proliferation prevention or suppression effect of the pathogenic germs and further excellent in antifouling effect.

For the apatite having photocatalytic activity, a suitably synthesized one may be used or a commercially available product may be used.

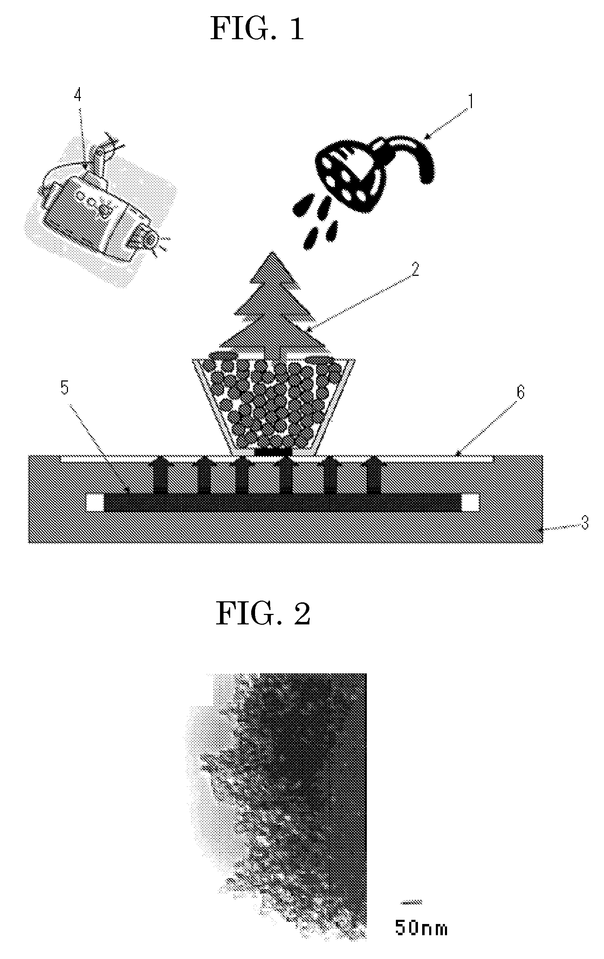

Preferred examples of commercially available products of the apatite having photocatalytic activity include, in the calcium titanium hydroxy apatite, product name "PCAP-100" manufactured by TAIHEI CHEMICAL INDUSTRIAL CO., LTD. FIG. 2 is an electron microscope photograph showing a secondary particle of the calcium titanium hydroxy apatite "PCAP"100". The photograph shows that fine primary particles of nano-order size flocculated and spherical primary particles were formed.

The visible light absorbing metal atom is not particularly limited and may be suitably selected in accordance with the intended use. For example, a metal atom having absorption property to light having a wavelength of 400 nm or more is preferably exemplified. Specifically, at least one selected from chrome (Cr) and nickel (Ni) is more preferably used. From the perspective of allowing for visually checking the state of photocatalytic activity of the photocatalytic powder, chrome (Cr) is preferable because chrome (Cr) can change its color from light yellow to light blue, and, reversely, from light blue to light yellow depending on the state of the photocatalytic activity.

The content of the visible light absorbing metal atom in the photocatalytic powder is not particularly limited and may be suitably selected in accordance with the intended use. For example, it is preferably 0.001 mol% to 1 mol% and more preferably 0.01 mol% to 1 mol% to the total content of all the metal atoms contained in the photocatalytic powder.

When the content of the visible light absorbing metal atom is less than 0.001 mol%, the absorption ability of the photocatalytic powder to visible lights may not be sufficient, and when more than 1 mol%, an effect matching the content cannot be obtained and the adsorption ability of the photocatalytic powder to the pathogenic germs (subjects to be decomposed) may be degraded.

The content of the visible light absorbing metal atom in the photocatalytic powder can be determined by carrying out, for example, the quantitative analysis by ICP-AES method.

The ultraviolet absorbing metal atom is not particularly limited and may be suitably selected in accordance with the intended use, however, it is preferably at least any one of tungsten (W) and vanadium (V). Each of them may be contained singularly in the photocatalytic powder or tow or more of them may be contained therein.

The content of the ultraviolet absorbing metal atom in the photocatalytic powder is preferably 0.001 mol% to 0.1 mol% to the total content of all the metal atoms contained in the photocatalytic powder.

When the content of the ultraviolet absorbing metal atom is less than 0-001 mol%, the absorption ability of the photocatalytic powder to ultraviolet rays may not be sufficient, and when more than 0.1 mol%, an effect matching the content cannot be obtained, the adsorption ability of the photocatalytic powder to the pathogenic germs (subjects to be decomposed) may be degraded and even the absorption ability to visible lights may be degraded.

The content of the ultraviolet absorbing metal atom in the photocatalytic powder can be determined by carrying out, for example, the quantitative analysis by ICP-AES method.

In the photocatalytic powder, the total content of the metal atom required to have photocatalytic activity, the ultraviolet absorbing metal atom and the visible light absorbing metal atom is not particularly limited and may be suitably adjusted in accordance with the intended use. For example, it is preferably 15 mol% or less and more preferably 3 mol% to 15 mol%.

Even when the total content is more than 15 mol%, an enhancement effect of photocatalytic activity matching the content cannot be obtained, on the contrary, the photocatalytic activity may be degraded.

For specific examples of the photocatalytic powder, a photocatalytic powder in which the metal atom required to have photocatalytic activity is titanium (Ti), the apatite is calcium hydroxy apatite (CaHAP), i.e., $Ca_{10}(PO_4)_6(OH)_2$ and the visible light absorbing metal atom is chrome (Cr) is preferable, and the photocatalytic powder that further contains the ultraviolet absorbing metal atom in which the ultraviolet absorbing metal atom is at least any one of tungsten (W) and vanadium (V) is more preferable.

The photocatalytic powder stated above is excellent in adsorption property to the pathogenic germs (subjects to be decomposed) adhering on plants. Further, when the photocatalytic powder also contains the ultraviolet absorbing metal atom, it can absorb not only visible lights but also ultraviolet rays and exhibit a wide range of light absorbance, is excellent in use efficiency of light and can be preferably used under various light irradiation conditions, for example, used for application under the condition of sunlight irradiation. In the case where the photocatalytic powder is irradiated with any one of a visible light and a ultraviolet ray, it is advantageous in that the photocatalytic powder can exhibit its excellent photocatalytic activity over a long period of time without the photocatalytic activity being saturated, and particularly when the photocatalytic powder is irradiated with a ultraviolet ray for a long period of time, it can keep its excellent photocatalytic activity (photocatalytic capability) without the photocatalytic activity being saturated.

Examples of the structure of the photocatalytic powder include a single structure, a laminate structure, a porous structure and a core shell structure.

Observations of the photocatalytic powder such as photocatalytic powder identification and shape can be carried out, for example, by TEM, XRD, XPS and FT-IR.

The volume average particle diameter of secondary particle of the apatite having photocatalytic activity is preferably 1 $\mu$m to 10 $\mu$m.

For primary particle (single crystal) of the apatite having photocatalytic activity, the apatite preferably has a particle size distribution of 10 nm to 1 $\mu$m.

It is preferable that an apatite having photocatalytic activity and having such a particle diameter is dispersed in water such that the solid content is 30% by mass or less, more preferably, 1% by mass or less, to thereby prepare a plant epidemic prevention agent. The lower limit value of the solid content of the apatite (the photocatalytic powder) having photocatalytic activity in water is preferably 0.001% by mass or more from the perspective that it allows the photocatalytic powder to be sufficiently supplied to or located on the surface of leaves of a plant to be sprayed or sprinkled to thereby obtain a sufficient photocatalytic effect.

In particular, by spraying or sprinkling the plant epidemic prevention agent prepared so that the solid content of the apatite (the photocatalytic powder) having photocatalytic activity in water is 1% by mass or less, onto a plant, the plant epidemic prevention agent can be evenly supplied to the plant in a wide area even with the use of a small amount, the efficiency of contact between the photocatalytic powder and pathogenic germs can be increased thereby to efficiently decompose and eliminate the pathogenic germs using the photocatalytic powder, and thereby to prevent the surface of stems and leaves of the plant from whitening to keep the appearance excellent.

The photocatalytic powder can be produced by a known method. For example, the photocatalytic powder can be produced by doping the above-noted visible light absorbing metal atom into the apatite having photocatalytic activity and in accordance with necessity, further doping the ultraviolet absorbing metal atom thereinto.

An embodiment of the doping is not particularly limited and may be suitably selected in accordance with the intended use. Examples thereof include substitution, chemical bonding and adsorption. Of these, substitution is preferably employed from the perspective that reaction control is easy and, after the doping, the visible light absorbing metal atom and the like can be stably held in the photocatalytic powder without desorbing the metal atoms.

An embodiment of the substitution is not particularly limited and may be suitably selected in accordance with the intended use. For example, when the apatite having a metal atom required to have photocatalytic activity is used as the apatite having photocatalytic activity, an embodiment in which at least pat of the metal atom is substituted by the visible light absorbing metal atom and the like is preferably exemplified. The embodiment is advantageous in that the visible light absorbing metal atom and the like can be surely held on the apatite so as not to drop off the apatite.

Type of the substitution with the visible light absorbing metal atom is not particularly limited and may be suitably selected in accordance with the intended use. For example, ion exchange is preferably exemplified. When ion exchange is employed as the substitution, it is advantageous in that ion exchange is excellent in substitution efficiency.

A specific method of the doping, i.e., a specific method of doping the visible light absorbing metal atom and the like into the apatite having photocatalytic activity is not particularly limited and may be suitably selected in accordance with the intended use. Preferred examples of the doping method include an immersion method in which the apatite having a metal atom required to have photocatalytic activity is immersed in an aqueous solution in which a compound containing the visible light absorbing metal atom and the like are dissolved or made to coexist; and a coprecipitation method in which the apatite material having a metal atom required to have photocatalytic activity and the visible light absorbing metal atom and the like are made to coprecipitate in an aqueous solution in which the apatite material and a compound containing the visible light absorbing metal atom and the like are dissolved or made to coexist.

The aqueous solution may be left at rest, however, it is preferably stirred in terms that the substitution can be efficiently carried out. The aqueous solution can be stirred by a known method using a known device. For example, the aqueous solution may be stirred using a magnetic stirrer, or a stirring device. Among the methods, immersion method is more preferable in terms of its easy handling.

In the immersion method, as described above, the apatite having a metal atom required to have photocatalytic activity may be immersed in an aqueous solution in which a compound containing the visible light absorbing metal atom and the like are dissolved or made to coexist, reversely, the compound containing the visible light absorbing metal atom and the like may be dissolved in an aqueous solution in which the apatite having a metal atom required to have photocatalytic activity is dispersed.

In the above-noted production example, the apatite having photocatalytic activity is used as a starting material, however, alternatively, the apatite and the metal atom required to have photocatalytic activity are used as starting materials, the apatite may be doped to the metal atom required to have photocatalytic activity at the same timing of doping of the visible light absorbing metal atom and the like or before the doping. In this case, doping of the visible light absorbing metal atom and the like is carried out at the same time as formation of the apatite having photocatalytic activity, or the apatite having photocatalytic activity is formed before the visible light absorbing metal atom and the like are doped to the apatite.

In the embodiment using the apatite having photocatalytic activity as a starting material, calcium titanium hydroxy apatite (TiHAP) preliminarily doped with nickel (Ni) can be preferably used as the apatite having photocatalytic activity.

The concentration of the apatite having a metal atom required to have photocatalytic activity in the aqueous solution at the time of doping is not particularly limited and may be suitably selected in accordance with the intended use. For example, it is preferably 0.3% by mass to 1.0% by mass and more preferably 0.4% by mass to 0.6% by mass.

When the concentration of the apatite is less than 0.3% by mass, the photocatalytic activity may be degraded, and when more than 1.0% by mass, an enhancement effect matching such a high concentration cannot be obtained, on the contrary, the photocatalytic activity may be degraded.

The concentration of the visible light absorbing metal atom in the aqueous solution at the time of doping is not particularly limited and may be suitably adjusted in accordance with the intended use. For example, it is preferably $1 \times 10^{-4}$M to $1 \times 10^{-3}$M and more preferably $1 \times 10^{-4}$M to $5 \times 10^{-4}$M.

When the concentration of the visible light absorbing metal atom is less than $1 \times 10^{-4}$M, the responsiveness to visible light of the visible light absorbing metal atom may be degraded, when more than $1 \times 10^{-8}$M, an enhancement effect of responsiveness to visible light matching the concentration cannot be obtained, on the contrary, the responsiveness to visible light may be degraded.

The concentration of the ultraviolet absorbing metal atom in the aqueous solution at the time of doping is not particularly limited and may be suitably adjusted in accordance with the intended use. For example, it is preferably $1 \times 10^{-3}$M to $1 \times 10^{-2}$M and more preferably $9 \times 10^{-3}$M to $1 \times 10^{-2}$M.

When the concentration of the ultraviolet absorbing metal atom is less than $1 \times 10^{-3}$M, the photocatalytic activity of the ultraviolet, absorbing metal atom to ultraviolet ray may be degraded, when more than $1 \times 10^{-2}$M, an enhancement effect of photocatalytic activity matching the concentration cannot be obtained, on the contrary, the photocatalytic activity to ultraviolet ray may be degraded.

The form of the visible light absorbing metal atom immersed in the aqueous solution at the time of doping is preferably a salt or a hydrate of the visible light absorbing metal atom in terms of its solubility in the aqueous solution and easy adjustment of the concentration of the ultraviolet absorbing metal atom in the aqueous solution.

The salt or hydrate is not particularly limited and may be suitably selected in accordance with the intended use. For example, when the visible light absorbing metal atom is chrome (Cr) and nickel (Ni), a slat containing at least one selected therefrom is preferable. Use of a chloride or a hydrosulfate thereof may degrade the photocatalytic activity, and thus it is particularly preferably a nitrate or an ammonium salt.

A reaction system used at the time of doping is not particularly limited and may be suitably selected in accordance with the intended use, however, the doping can be carried out, for example, in liquid or in the air. The doping is preferably carried out in liquid.

In this case, the liquid is not particularly limited and may be suitably selected in accordance with the intended use, however, it is preferable to use water or a liquid primarily containing water.

A vessel to pour the liquid in is not particularly limited and may be suitably selected from among those known in the art. For example, in the case of a large amount of liquid, a mixture and a stirrer are preferably used, and in the case of a small amount of liquid, beaker and the like are preferably used.

Conditions at the time of doping are not particularly limited, and doping temperature, doping time, pressure and the like may be suitably selected in accordance with the intended use.

The doping temperature is not particularly limited, varies depending on the type and quantitative ratio etc. of used materials and cannot be uniformly defined. For example, the doping temperature is usually around 0°C to 100°C, and room temperature (20°C to 30°C) is preferable. The doping time is not particularly limited, varies depending on the type and quantitative ration of used materials and cannot be uniformly defined. The doping time is usually around 10 seconds to 30 minutes and more preferably 1 minute to 10 minutes. The pressure is not particularly limited, varies depending on the type and quantitative ratio etc. of used materials and cannot be uniformly defined, however, usually, it is preferably atmospheric pressure.

The amount of the metal required to have photocatalytic activity, the visible light absorbing metal atom and the like in the photocatalytic powder can be desirably controlled by adjusting the addition amount (M) of them or suitably adjusting the above-noted conditions.

After the visible light absorbing metal atom and the like are doped to the apatite having photocatalytic activity, i.e., after the doping, the doped apatite is then calcined at 600°C to 800°C.

When the calcination temperature is lower than 600°C, the maximum photocatalytic activity may not be obtained, and when higher than 800°C, the apatite may be broken down.

The calcination conditions such as calcination time, atmosphere, pressure and a device are not particularly limited and may be suitably selected in accordance with the intended use. The calcination time varies depending on the amount of the apatite the visible light absorbing metal atom etc. have been doped and the like and cannot be uniformly defined, however, it is preferably calcined, for example, for 1 hour or more and more preferably calcined for 1 hour to 2 hours. For the atmosphere, for example, nitrogen or argon (inactive gas) and the atmosphere are exemplified. The atmosphere is preferable. For the pressure, for example, atmospheric pressure is exemplified. For the device, calcinators known in the art can be used.

By calcinating the apatite, the crystallinity of the apatite having photocatalytic activity to which the visible light absorbing metal atom and the like are doped can be enhanced and the photocatalytic capability (including adsorption property and photocatalytic activity) can be further enhanced.

Here, one example of the method of producing the photocatalytic powder is described. When the doping is carried out by substitution, specifically, when the substitution is carried out by a coprecipitation method through ion exchange, first, in pure water that has been subjected to a decarbonation treatment, for example, a calcium nitrate aqueous solution of calcium hydroxy apatite (CaHAP) as the apatite, a titanium sulfate aqueous solution containing titanium used to dope the titanium as the metal atom required to have photocatalytic activity to the CaHAP, a chromium nitrate aqueous solution containing chrome that is the visible light absorbing metal atom and an aqueous solution of 12-tungstrophosphoric acid-n-hydrate containing tungsten as the ultraviolet absorbing metal atom are mixed at a specific ratio. Next, phosphoric acid is added to the obtained mixture and ammonia water is further added thereto to thereby adjust the pH to 9. The obtained suspension is aged for 6 hours at 100°C for maturing and crystal growth and then filtrated. The filtrated sediment is washed with pure water and then dried. Subsequently, the temperature of the sediment is increased to 660°C in one hour to calcine the sediment. With the above-noted procedures, a TiHAP powder (photocatalytic powder) doped with vanadium (V) as the ultraviolet absorbing metal atom and chrome (CR) as the visible light absorbing metal atom respectively can be produced.

When the doping is carried out by substitution, specifically, when the substitution is carried out by an immersion method through ion exchange, first, a chromium nitrate (III) nonahydrate containing chrome as the visible light absorbing metal atom is dissolved in pure water to prepare a chromium nitrate aqueous solution. Calcium titanium hydroxy apatite (TiHAP) as the apatite containing a metal atom (titanium) required to have photocatalytic activity is weighed and put in a beaker, and the chromium nitrate is added thereto. The mixture is stirred with a magnetic stirrer for 5 minutes, then aspirated and filtrated with filter paper using an aspirator, the sediment is washed with pure water and then dried in an oven heated at 100°C for 2 hours to thereby obtain a TiHAP powder doped with the visible light absorbing chrome. Next, ammonium vanadate containing vanadium as the ultraviolet absorbing metal atom is dissolved in pure water to prepare an ammonium vanadate aqueous solution. The TiHAP doped with chrome is weighed and put in a beaker, and the ammonium vanadate is added thereto. The mixture solution is stirred with a magnetic stirrer, then aspirated and filtrated with filter paper using an aspirator, the sediment is washed with pure water and dried in an oven heated at 100°C for 2 hours. Thereafter, the sediment is calcined in a muffle furnace at 650°C for one hour in the atmosphere. With the procedures described above, a photocatalytic powder containing a TiHAP powder (apatite having a metal atom required to have photocatalytic activity) doped with chrome as the visible light absorbing metal atom and vanadium as the ultraviolet absorbing metal atom can be produced.

- Other Components -

Examples of other components other than the photocatalytic powder include, as described above, a solvent such as water and alcohol, a fertilizer such as a phosphorous compound and a pigment.

The pigment can be added to the plant epidemic prevention agent in accordance with necessity for coloring the agent according to the hue of a plant to be supplied with the plant epidemic prevention agent. With the use of the thus colored plant epidemic prevention agent even with a large amount of the pigment is added, the effect of preventing stems and leaves of plants from whitening can be improved, and appearance of plants can be further prevented from being degrading.

With the use of the plant epidemic prevention agent of the present invention, the photocatalytic powder contained in the plant epidemic prevention agent supplied to a plant can be made adhere on the surface. The photocatalytic powder supplied to the plant is activated by irradiation of light, thereby pathogenic germs such as bacteria, viruses, bacillus and fungi adhering on the plant can be easily and efficiently decomposed and eliminated. As a result, plant disease caused by the pathogenic germs can be prevented or suppressed. Even when the plant is infected with pathogenic germs, the pathogenic germs can be decomposed and eliminated, the proliferation thereof can also be prevented, and the plant can recover from the disease. Further, the plant epidemic prevention agent of the present invention contains a photocatalytic powder, it has less adverse affect on the human body as compared to conventional antibacterial agents, and even when sprinkled to soils, the plant epidemic prevention agent will not cause soil pollution, and thus the plant epidemic prevention agent allows for achieving environmental preservation. The plant epidemic prevention agent in soil is absorbed in a plant from the root of the plant, which makes it possible to prevent pathogenic germs from invading the plant from the root. Further, since the photocatalytic powder contains phosphorous, it can be a nutrient to the plant and it 16 possible to enhance antimicrobial activity of the plant itself.

The plant is not particularly limited and may be suitably selected in accordance with the intended use. For example, orchids are preferably exemplified. Phalaenopsis orchids are particularly preferably exemplified.

(Plant Epidemic Prevention Method, Plant Epidemic Prevention System and Plant Cultivation Method)

The plant epidemic prevention method of the present invention include supplying the plant epidemic prevention agent of the present invention to a plant (hereinafter, may be called a plant epidemic prevention agent supplying step) and further includes a monitoring step, a conveying step, a ultraviolet irradiation step and other steps in accordance with necessity.

The plant epidemic prevention system of the present invention is equipped with at least a monitoring unit and a supplying unit, and plant disease is detected by the monitoring unit and a plant epidemic prevention agent is supplied to the diseased plant by the supplying unit.

The plant epidemic prevention system may is further equipped with a conveying unit, a ultraviolet irradiation unit and other units in accordance with necessity.

The monitoring step can be preferably carried out by the monitoring unit, the plant epidemic prevention agent supplying step can be preferably carried out by the supplying unit, the conveying step can be preferably carried out by the conveying unit, the ultraviolet irradiation step can be preferably carried out by the ultraviolet irradiation unit and the other steps can be preferably carried out by the other units. Therefore, the plant epidemic prevention method of the present invention can be preferably carried out by the plant epidemic prevention system of the present invention, and when the plant epidemic prevention system of the present invention is implemented, which means that the plant epidemic prevention method of the present invention is to be carried out.

The plant cultivation method can be preferably carried out by including a plant epidemic prevention agent supplying step in which the plant epidemic prevention agent of the present invention is supplied onto the surface of a plant using the plant epidemic prevention system, or by including a step of carrying out the plant epidemic prevention method, in at least part of steps of a known cultivation method. In the plant cultivation method of the present invention, steps other than the above-noted steps can be carried out by following a conventional method, and the descriptions thereof are omitted here.

Hereinafter, the plant epidemic prevention system of the present invention will be described in detail, and the descriptions on the plant epidemic prevention method and the plant cultivation method of the present invention will be clarified through the description of the plant epidemic prevention system.

< Plant Epidemic Prevention Agent Supplying Unit and Plant Epidemic Prevention Agent Supplying Step >

The supplying unit has a function to supply the plant epidemic prevention agent of the present invention to a plant.

The plant epidemic prevention agent supplying step is a step in which the plant epidemic prevention agent of the present invention is supplied to a plant.

The plant epidemic prevention agent supplying step can be preferably carried out by the supplying unit.

The supplying unit may be, as described in descriptions on the plant epidemic prevention agent, a sprinkling unit which is configured to sprinkle the powdery plant epidemic protection agent to a plant or may be a spraying unit configured to spray an aqueous dispersion containing the photocatalytic powder onto a plant. Of these, a spraying unit configured to spray an aqueous dispersion is preferable from the perspective that it allows for evenly supplying the plant epidemic prevention agent in a wide area and preventing the plant from whitening, even with use of a small amount thereof.

Specifically, the spraying unit may be a spraying unit configured to spray the plant epidemic prevention agent using a simple device, for example, like an atomizer, or may be a spraying unit configured to spray the plant epidemic prevention agent using a sprayer or a spraying device equipped with spray amount controlling units such as a tank and a nozzle.

The supplying unit may be the one configured to supply the plant epidemic prevention agent to diseased plant for curing purpose at the timing when the plant disease is detected by the monitoring unit and may be the one configured to supply the plant epidemic protection agent not only to diseased plants but also to healthy plants for the purpose of preventing or suppressing occurrence of plant disease.

< Monitoring Unit and Monitoring Step >

The monitoring unit has a function to detect plant disease by monitoring the hue of a plant.

The monitoring step can be preferably carried out the monitoring unit.

The monitoring unit is not particularly limited as long as it can detect plant disease, and may be suitably selected in accordance with the intended use. For example, various sensors such as cameras and color difference sensors can be used.

In the monitoring step, it is preferable that the hue of a healthy plant is stored in a computer and the hue is compared to the hue of a plant to be monitored, and a plant disease is detected by the color difference. When the plant disease is detected in this way, it is preferable that the plant epidemic prevention agent is supplied to the diseased plant. This method allows for efficiently curing the diseased plant.

< Conveying Unit and Conveying Step >

The conveying unit has a function to convey a plant.

The conveying step is a step in which a plant is conveyed.

The conveying step can be preferably carried out by the conveying unit.

The conveying unit is not particularly limited and may be suitably selected in accordance with the intended use. For example, belt conveyers, roller conveyers and robot arms are exemplified.

By the conveying unit, for example, a plant is or plants are sequentially conveyed on an individual piece basis to the monitoring unit, and plant disease is detected by the monitoring unit. Next, the plant epidemic prevention agent can be efficiently supplied to the diseased plant detected by the monitoring unit by conveying the diseased plant to the supplying unit by means of the conveying unit. Because the diseased plant can be sequentially conveyed in this way by the conveying unit, there is no need to install a plurality of monitoring units and supplying units and it enables to make the plant epidemic prevention system compact as well as allowing for low cost performance.

< Ultraviolet Irradiation Unit and Ultraviolet Irradiation Step >

The ultraviolet irradiation unit has a function to irradiate the plant epidemic prevention agent supplied to the plant with ultraviolet ray.

The ultraviolet irradiation step is a step in which the plant epidemic prevention agent supplied to the plant is irradiated with ultraviolet ray.

The ultraviolet ray irradiation step can be preferably carried out by the ultraviolet irradiation unit.

The ultraviolet irradiation unit is preferably used when the photocatalytic powder contains a ultraviolet absorbing metal atom, and the unit can efficiently photocatalyst.

The ultraviolet irradiation unit is not particularly limited as long as it can irradiate a subject with ultraviolet ray, and may be suitably selected in accordance the intended use. The ultraviolet irradiation unit may be sunlight or may be a ultraviolet lamp (UV lamp).

FIG. 1 shows one example of the plant epidemic prevention system of the present invention. The plant epidemic prevention system is equipped with, as shown in FIG. 1, a shower nozzle 1 as a spraying unit or a sprinkling unit (supplying unit) of the plant epidemic prevention agent containing a photocatalytic powder, a stand 3 to place a plant 2 thereon and a wide-angle camera and a color difference sensor 4 as monitoring units. A ultraviolet (UV) lamp 5 as a ultraviolet irradiation unit is set inside the stand to allow the plant 2 to be irradiated with ultraviolet ray from a glass window 6 mounted at the top surface of the stand 3. The photocatalytic powder sprayed or sprinkled onto the surface of the plant 2 is activated by applied ultraviolet ray, and pathogenic germs such as bacteria, viruses, bacillus and fungi adhering on the plant 2 can be efficiently decomposed and eliminated.

In the plant epidemic prevention method and the plant epidemic prevention system and the plant cultivation method of the present invention, by supplying the plant epidemic prevention agent of the present invention to a plant, pathogenic germs such as bacteria, viruses, bacillus and fungi that cause plant epidemic can be easily and efficiently decomposed and eliminated, it allows for effectively suppressing plant disease caused by the pathogenic germs and making diseased plant recover from the disease without adversely affecting the human body and also allows for achieving environmental preservation. Further, the plant epidemic prevention agent is thus excellent in epidemic prevention effect, it can prevent losses to be incurred by plant epidemic and improve production efficiency in plant cultivation.

The plant epidemic prevention agent of the present invention can easily and efficiently decompose and eliminate pathogenic germs such as bacteria, viruses, bacillus and fungi that cause plant epidemic, can effectively prevent plant disease caused by the pathogenic germs and make a diseased plant recover from the disease, can be preferably used an epidemic prevention agent in plant cultivation, particularly in plant cultivation using greenhouses and can be particularly preferably used in the plant epidemic prevention method and the plant epidemic prevention system of the present invention.

The plant epidemic prevention method and the plant epidemic prevention system of the present invention allows for easily and efficiently decomposing and eliminating pathogenic germs such as bacteria, viruses, bacillus and fungi that cause plant epidemic and effectively preventing plant disease caused by the pathogenic germs and making a diseased plant recover from the disease.

Hereafter, the present invention will be further described in detail referring to specific Examples, however, the present invention is not limited to the disclosed Examples. On the contrary, the present invention is intended to cover various modifications and equivalent arrangements included within the spirit and scope of the appended claims.

(Example 1)

- Preparation of Plant Epidemic Prevention Agent -

As a photocatalytic powder, photocatalytic titanium apatite (an apatite having titanium as a metal required to have photocatalytic activity) was used.

As the photocatalytic titanium apatite, calcium titanium hydroxy apatite (TiHAP; trade name: PCAP-100, a white powder having a volume average particle diameter of 3 $\mu$m to 8 $\mu$m, manufactured by TAIHEI CHEMICAL INDUSTRIAL CO., LTD.) shown in FIG. 2 was dispersed in water to prepare a plant epidemic prevention agent having a solid content of 1% by mass.

- Plant Epidemic Prevention Effect Test 1 (in vitro test) -

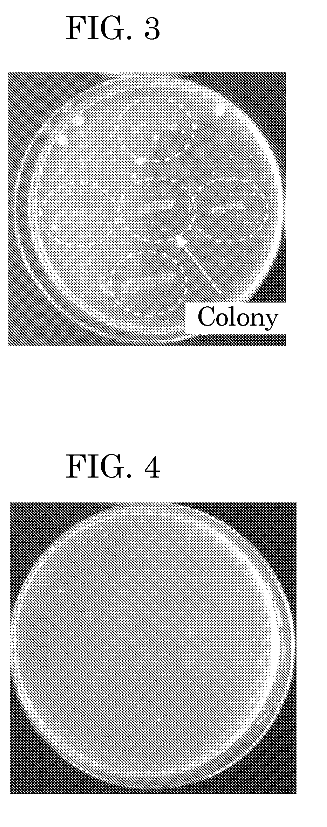

A confirmatory test of antibacterial effect of the plant epidemic prevention agent to a pathogenic bacterium of Phalaenopsis soft rot (Erwinia chrysanthemi) was carried out according to the following procedure. Specifically, a culture solution having a concentration of the pathogenic bacterium of Phalaenopsis soft rot of $10^4$ was inoculated to 5 sites in an ajar medium (two types of ajar media were prepared, and specifically, an ajar medium with no titanium apatite added thereto and an ajar medium with 0.06% by mass of titanium apatite added thereto were prepared) using a platinum needle. These two ajar media was irradiated with a ultraviolet ray with an intensity of 1 mW/cm$^2$ for 3 hours and further incubated at 28°C for 48 hours. Proliferation of the pathogenic bacterium of Phalaenopsis soft rot was assayed based on presence or absence of colony generation to thereby check antibacterial effect of the plant epidemic prevention disease. FIGS. 3 and 4 show the test results.

As can be seen clearly from the results of the epidemic prevention effect test 1, in the case of the ajar medium to which the titanium apatite as the plant epidemic prevention agent of the present invention was not added, the pathogenic bacterium of Phalaenopsis soft rot proliferated without being killed even after the ajar medium was irradiated with ultraviolet dose included in the sunlight (see FIG. 3). In contrast, in the case of the ajar medium to which the titanium apatite as the plant epidemic prevention agent of the present invention was added, the pathogenic bacterium of Phalaenopsis soft rot was killed without proliferating (see FIG. 4). This shows that the plant epidemic prevention agent exhibited extremely favorable antibacterial effect.

- Plant Epidemic Prevention Effect Test 2 (disease prevention effect test) -

1) Cultural type: crop name: Phalaenopsis (Phalaenopsis orchid)
2) Partition/Area: 8 plants for one partition, and three consecutive partitions were allocated. As a control experiment, a partition was prepared for 8 plants with no pathogenic bacterium inoculated thereto for one partition, without repetition.
3) Pathogenic germ : pathogenic bacterium of Phalaenopsis soft rot (Erwinia chrysnthemi)

< Treatment using plant epidemic prevention agent >

The plant epidemic prevention agent containing the photocatalytic titanium apatite prepared as described above was sprayed to the Phalaenopsis plants using a commercially available atomist spray so that a sufficient amount of the plant epidemic prevention agent could adhere on stems and leaves of the Phalaenopsis plants at a ratio of 11.25 mL/ plant. Note that the growth stage of the crop at the test time was a rearing period.

< Inoculation of Pathogenic Bacterium >

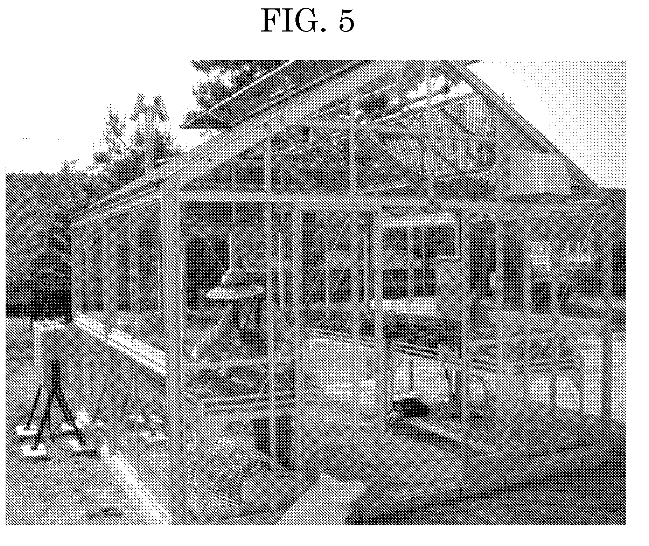

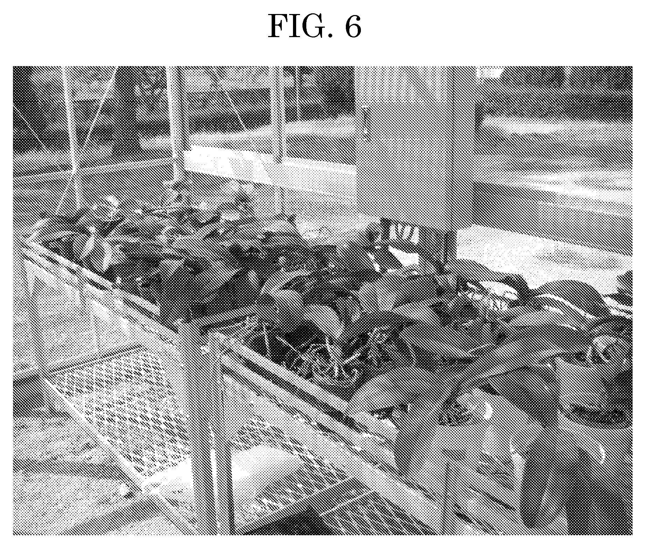

As a source of inoculum, a strain of pathogenic bacterium of Phalaenopsis soft rot (Erwinia chrysanthemi) was used. The sample strain was applied to an NA culture medium and the pathogenic bacterium was incubated at 27.5°C under darkness. Three days later of the incubation, the NA culture medium incubated with the pathogenic bacterium was diluted to approximately $1 \times 10^8$ CFU ($OD_{660}$ = 0.09) times with sterilized water to prepare a bacterium liquid. Then, the bacterium liquid was sprayed onto and inoculated to stems and leaves of the Phalaenopsis plants, and the Phalaenopsis plants were left intact in humid conditions of average temperature of 24.5°C and average humidity of 70% (see FIGS. 5 and 6). Further, to accelerate infection, one day later of the inoculation of pathogenic bacterium, the Phalaenopsis plants were marked on the basis of three sites in leaf surface for one plant to slightly wound them at the marked sites several times with a sterile insect needle (a set of five needles).

< Assay of disease onset prevention effect >

Twenty-one days later of the inoculation of pathogenic bacterium, the wounded sites were observed with the naked eye as to disease onset level of lesions and evaluated at six levels as follows. The disease onset level of the respective plants was determined according to the following calculation formula. There were variations in the disease onset state according to plant and according to wound site, however, the evaluation was based on the average basis.

0: No disease onset was observed.
1: A slight amount of brown discoloration was observed.
2: Outspread of brown discoloration was observed.
3: A lesion (brown discoloration) was outspread and a mixture of lesions was observed.
4. A lesion was outspread and a large-scale water-soaked lesion was observed.
5: A large-scale water-soaked lesion was observed over most of the leaf blade.

$$\text{Disease onset level} = \Sigma \text{ (disease onset level of lesion} \times \text{the number of}$$

$$\text{lesion sites)} / \text{(the number of investigated sites} \times 5) \times 100$$

The calculation formula described above indicates a value obtained by dividing a total of a plant evaluated as the disease onset level 1 $\times$ the number of lesion sites, a plant evaluated as the disease onset level 2 $\times$ the number of lesion sites, a plant evaluated as the disease onset level 3 $\times$ the number of lesion sites, a plant evaluated as the disease onset level 4 $\times$ the number of lesion sites and a plant evaluated as the disease onset level 5 $\times$ the number of lesion sites by the number of investigated sites $\times$ 5, and multiplying the divided value by 100.

Table 1 shows the calculation results.

In Plant Epidemic Prevention Test 2, occurrence of disease was favorably prevented and most of the plants respectively were evaluated with a low value, however, some plants were evaluated with a slightly high value. This can be considered that these some plants developed lesions because the plant epidemic prevention agent was rather nonuniformly sprayed or sprinkled onto these some plants in the spraying or sprinkling and there were sites to which the photocatalyst was not sufficiently applied. The sites to which the plant epidemic prevention agent was sufficiently sprayed or sprinkled verified that the plant epidemic prevention agent allowed for preventing and eliminating pathogenic germs and had no problem in practical use.

-Dispersibility of Plant Epidemic Prevention Agent in Aqueous Dispersion-

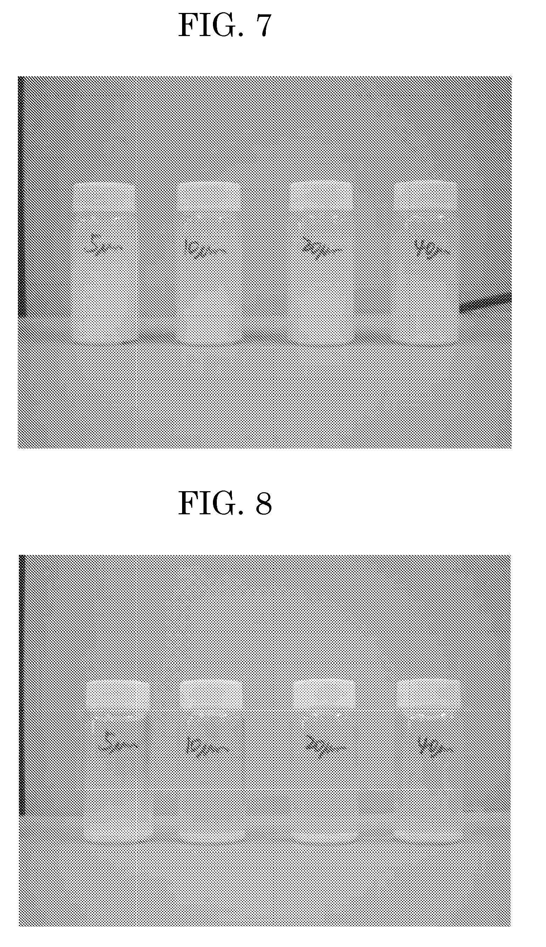

Next, the dispersibility of the plant epidemic prevention agent of the present invention in an aqueous dispersion was checked according to the following procedure. Specifically, 0.5 g of powders of the plant epidemic prevention agent (titanium apatite) respectively having a volume average particle diameter of 5 $\mu$m, 10 $\mu$m, 20 $\mu$m and 40 $\mu$m were respectively dispersed in 50 mL of water to prepare aqueous dispersions. As the result, the powder of the plant epidemic prevention agent (titanium apatite) having a volume average particle diameter of 5 $\mu$m or less hardly precipitated in the aqueous dispersion not only in the immediate aftermath of the dispersion but also 10 minutes later of the dispersion and showed excellent dispersibility. (see FIGS. 7 and 8).

(Comparative Example 1)

The pathogenic bacterium was inoculated into plants of Phalaenopsis orchid in the same manner as in Plant Epidemic Prevention Effect Test 2 carried out in Example 1, except that no plant epidemic prevention agent was supplied to plants. Twenty-one days later of the inoculation, the disease onset level of the plants was observed to evaluate the disease onset prevention effect. Table 1 shows the result.

(Comparative Example 2)

The pathogenic bacterium was inoculated into plants of Phalaenopsis orchid in the same manner as in Example 1, except that a conventional plant epidemic prevention agent in which a kasugamycin copper water-dispersible powder was diluted to 1,000 times (in a normal use form with a concentration of 0.1% by mass) was used in place of the plant epidemic prevention agent containing calcium titanium hydroxy apatite used in Example 1. Twenty-one days later of the inoculation, the disease onset level of the plants was observed to evaluate the disease onset prevention effect. Table 1 shows the result.

Table 1

|  | 12 days later of inoculation | 21 days later of inoculation |
|---|---|---|
| Ex. 1 | 15.3 | 17.3 |
| Compara. Ex. 1 | 4.1 | 4.8 |
| Compara. Ex.2 | 12.4 | 14.6 |

The results shown in FIGS. 2 to 3 and Table 1 verified that in Example 1 in which the plant epidemic prevention agent containing calcium titanium hydroxy apatite was supplied to the plants, the plant epidemic prevention agent allowed for preventing or suppressing occurrence of plant disease caused by the pathogenic bacterium.
In contrast, the result of Comparative Example 1 in which no plant epidemic prevention agent was supplied to the plants and the result of Comparative Example 2 in which a kasugamycin copper water-dispersible powder was supplied to plants respectively demonstrated that it was impossible to prevent occurrence of disease.
Thus, it was recognized that the plant epidemic prevention agent of the present invention containing a photocatalytic powder containing phosphorous can efficiently decompose and eliminate pathogenic germs such as bacteria, viruses, bacillus and fungi that cause plant epidemic and is excellent in disease prevention effect or disease suppression effect.
Since the kasugamycin copper water-dispersible powder is an antibiotic and has a problem that it would cause soil pollution if left intact in the soil even with a concentration of 0.01% by mass. In contrast, the plant epidemic prevention agent containing calcium titanium hydroxy apatite of the present invention can be used without adversely affecting the human body and environments.

(Example 2)

- Plant Epidemic Prevention Effect Test 2 (test of recovery from disease) -

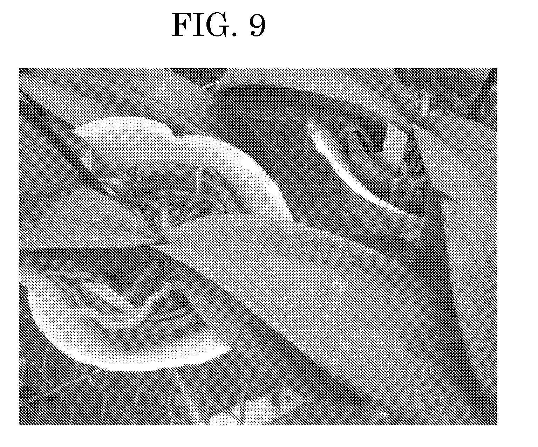

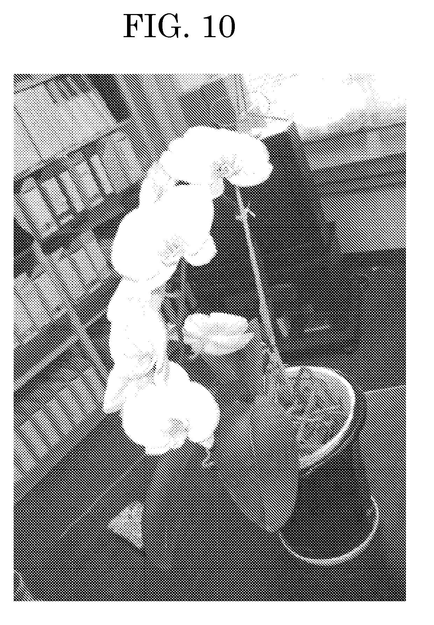

In a cultivation farmhouse of orchid plants, the present inventors got Phalaenopsis plant that had developed soft rot disease and had been disposed of. The plant epidemic prevention agent prepared in Example 1 (with a concentration of 1% by mass of calcium titanium hydroxy apatite) was sprayed entirely over the Phalaenopsis plant, not only lesion sites of the plants. FIG. 9 is a photograph showing a state of leaves immediately after the plant epidemic prevention agent was sprayed or sprinkled onto the leaves. After spraying the plant epidemic prevention agent with a concentration of 1% by mass onto the plant, whitening of leaves that would damage the appearance of the plant was not observed. As a result of the spraying, progress of disease was stopped, and as shown in FIG. 10, one year later, the first sprout and the floral stem appeared, and the plant bloomed and produced a new flower. Thus, it turned out that the plant epidemic prevention agent of the present invention has also a function to make diseased plants recover from the disease.
FIG. 11 is an electron microscope photograph showing a state of stoma of a plant immediately after the plant epidemic prevention agent of the present invention was sprayed or sprinkled onto the plant. The photocatalytic powder adhered on the surround of the stoma, as a matter of course, on the surface of leaves. From this result, it can be assumed that the plant epidemic prevention agent allowed for not only decomposing and eliminating the pathogenic bacterium infected to the plant but also preventing or suppressing invasion of the pathogenic bacterium from stoma of the plant, thereby making the plant recover from the disease.

**Claims**

1. A plant epidemic prevention agent, comprising:

   a photocatalytic powder containing phosphorous.

2. A plant epidemic prevention agent, comprising:

   a photocatalytic powder containing an apatite structure.

3. The plant epidemic prevention agent according to any one of claims 1 to 2, being an aqueous dispersion containing the photocatalytic powder in a dispersed state in water.

4. The plant epidemic prevention agent according to claim 3, used to be sprayed or sprinkled onto plants.

5. The plant epidemic prevention agent according to any one of claims 1 to 4, wherein the photocatalytic powder has a volume average particle diameter of 50 nm to 5 $\mu$m.

6. The plant epidemic prevention agent according to any one of claims 3 to 5, wherein the solid content of the aqueous dispersion is 0.001% by mass to 30% by mass.

7. The plant epidemic prevention agent according to any one of claims 3 to 5, wherein the solid content of the aqueous dispersion is 0.001% by mass to 1% by mass.

8. The plant epidemic prevention agent according to any one of claims 1 to 7, wherein the photocatalytic powder is an apatite, the apatite comprises a metal atom required to have photocatalytic activity, and the metal atom is titanium (Ti).

9. The plant epidemic prevention agent according to any one of claims 1 to 7, wherein the photocatalytic powder is an apatite, and the apatite is calcium hydroxy apatite $Ca_{10}(PO_4)_6(OH)_2$.

10. A plant, having a plant epidemic prevention agent on the surface thereof, wherein the plant epidemic prevention agent is a plant epidemic prevention agent according to any one of claims 1 to 2.

11. A plant epidemic prevention method, comprising:

    supplying a plant epidemic prevention agent to a plant, wherein the plant epidemic prevention agent is a plant epidemic prevention agent according to any one of claims 1 to 2.

12. The plant epidemic prevention method according to claim 11, wherein an aqueous dispersion with the photocatalytic powder dispersed therein is sprayed or sprinkled onto the plant.

13. The plant epidemic prevention method according to claim 12, wherein the solid content of the aqueous dispersion is 30% by mass or less.

14. The plant epidemic prevention method according to claim 12, wherein the solid content of the aqueous dispersion is 1% by mass or less.

15. A plant epidemic prevention system, comprising:

    a monitoring unit configured to monitor the hue of a plant, and
    a supplying unit configured to supply a plant epidemic prevention agent to the plant,
    wherein lesions of the plant are detected by the monitoring unit, and the plant epidemic prevention agent is supplied to the diseased plant by the supplying unit.

**16.** The plant epidemic prevention system according to claim 15, wherein the supplying unit is a spraying unit or a sprinkling unit configured to spray or sprinkle an aqueous dispersion with the photocatalytic powder dispersed therein to the plant.

**17.** The plant epidemic prevention system according to claim 15, further comprising a conveying unit, wherein the monitoring unit is configured to monitor the hue of the plant that is sequentially conveyed by the conveying unit.

**18.** The plant epidemic prevention system according to claim 15, wherein the monitoring unit is configured to detect the lesions of the plant depending on the hue difference between the hue of the plant that has been preliminarily stored in a computer and the hue of the plant to be monitored.

**19.** The plant epidemic prevention system according to claim 15, further comprising an ultraviolet irradiation unit.

**20.** A plant cultivation method, comprising :

supplying a plant epidemic prevention agent to plants,
wherein the plant epidemic prevention agent is a plant epidemic prevention agent according to any one of claims 1 to 2.

# FIG. 1

# FIG. 2

50nm

# FIG. 3

Colony

# FIG. 4

# FIG. 5

# FIG. 6

# FIG. 7

# FIG. 8

FIG. 9

# FIG. 10

# FIG. 11

# FIG. 12

Lesion site

# FIG. 13

Lesion site

**REFERENCES CITED IN THE DESCRIPTION**

**Patent documents cited in the description**

- JP 2006204816 A
- JP 2007191897 A
- JP 2006050992 A
- WO 2004000018 A